(19) Europäisches Patentamt
European Patent Office
Office européen des brevets

(11) **EP 3 769 411 B1**

(12) **EUROPEAN PATENT SPECIFICATION**

(45) Date of publication and mention
of the grant of the patent:
**04.05.2022 Bulletin 2022/18**

(21) Application number: **19711910.0**

(22) Date of filing: **20.03.2019**

(51) International Patent Classification (IPC):
*H02M 3/337* (2006.01)     *H02J 50/12* (2016.01)
*H02J 50/80* (2016.01)

(52) Cooperative Patent Classification (CPC):
**H02J 50/80; H02J 50/12; H02M 3/3376;**
H02M 1/0003; H02M 7/4815; Y02B 70/10

(86) International application number:
**PCT/EP2019/057002**

(87) International publication number:
**WO 2019/180100 (26.09.2019 Gazette 2019/39)**

(54) **DETERMINING SYSTEM PARAMETERS OF A CONTACTLESS ELECTRICAL ENERGY TRANSFER SYSTEM**

BESTIMMUNG VON SYSTEMPARAMETERN EINES DRAHTLOSES ENERGIEÜBERTRAGUNGSSYSTEMS

DÉTERMINATION DE PARAMÈTRES DE SYSTÈME D'UN SYSTÈME DE TRANSFERT D'ÉNERGIE ÉLECTRIQUE SANS CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2018 NL 2020660**

(43) Date of publication of application:
**27.01.2021 Bulletin 2021/04**

(73) Proprietor: **Prodrive Technologies Innovation Services B.V.**
**5692 EM Son en Breugel (NL)**

(72) Inventors:
• **SLAATS, Noud Johan Hubert**
  **5623 AX Eindhoven (NL)**
• **EVERTS, Jordi**
  **2360 Oud-Turnhout (BE)**

(74) Representative: **AWA Benelux**
**Avenue Josse Goffin 158**
**1082 Bruxelles (BE)**

(56) References cited:
**EP-A1- 3 031 117      DE-A1-102015 223 230**
**US-A1- 2017 080 814**

## Description

### Technical field

The present invention is related to a method of estimating system parameters, such as coupling factor and inductance, of a contactless (or wireless) electrical energy transfer system. The present invention is also related to a contactless (or wireless) electrical energy transfer system that incorporates means for estimating system parameters.

### Background art

Contactless electrical energy transfer (CEET) is a known alternative for wired or conductive power transfer. It is used for mobile consumer electronic devices that are battery operated. These devices are charged wirelessly by means of induction by placing a device equipped with a secondary (receiver) coil near a charging station equipped with a primary (transmitter) coil. The primary coil, which is driven by an alternating current (AC), generates an electromagnetic field which induces an alternating current in the secondary coil that may be used to power the device or charge the batteries of the device. Typically, in these applications the air gap between the coils is small and the coils are well aligned, and a high magnetic coupling factor $k$ (e.g. k>0.5) is achieved that ensures efficient power transfer without significant energy losses.

Lately, there is an increasing interest to wirelessly charge electric vehicles and hybrid electric vehicles. In these applications the coils are only weakly coupled (e.g. coupling factor $k$ smaller than 0.5, e.g. in the range 0.1-0.3) with a large self-inductance and a low mutual inductance, due to the larger air gap (e.g. on the order of 15 cm or more) and larger axial misalignment (e.g. on the order of a few cm) between the primary and the secondary coil.

DE 10 2015 223 230, 24 May 2017, discloses a CEET system with primary and secondary resonator circuits for inductive power transfer. The secondary resonator circuit comprises a series connection of a resonator coil and a resonator capacitor. The CEET system further comprises a switching unit, a current sensing unit and a control unit. The switching unit is configured to short the secondary resonator circuit. A test voltage is then applied by the control unit to the primary resonator circuit. This induces a current in the shorted secondary resonator circuit, which is measured by the current sensing unit. The control unit compares the measured current with a threshold and will only allow energy transfer if the measured current exceeds the threshold, which may be an indication that the primary and secondary coils are correctly aligned and/or that the system is free of errors. One disadvantage of such a system is that only the initiation of energy transfer is controlled whereas the performance of the energy transfer as such is not.

US 2017/0080814, 23 March 2017, discloses a CEET system including a first coil configured to be loosely inductively coupled to a second coil. The first coil may be part of a vehicle charging station and the second coil may be part of a vehicle. A controller is programmed to command a short circuit between terminals of the second coil and apply a test voltage to the first coil. The controller is programmed to estimate system parameters, such as self-inductances and mutual inductance, based on voltage and current measurement from only the first or the second coil. The parameters may be utilized to control transfer of energy to the vehicle, for instance by changing an impedance value of a selectable impedance network coupled to the transmit and/or receive coil. One disadvantage of this solution is that the short circuit switch is arranged between terminals of the inductor coil and must be able to tolerate very high voltage across it. Another disadvantage is that this solution relies on iterations of estimating parameters to achieve a reliable estimation.

### Summary of the invention

It is an aim of aspects of the present invention to provide a method and system allowing for improving power transfer efficiency and/or power transfer control in a CEET system. It is an aim of aspects of the present invention to provide a method and system allowing for determining system parameters of a wireless energy transfer system in a more rapid and easier way.

In one aspect, the parameters of a CEET system, which may include primary inductance, secondary inductance and coupling factor are determined in a simple and reliable way. The determined parameters can be used in a control scheme for inductive power transfer to improve system efficiency and power control, and may be used to verify alignment between power transfer coils.

According to a first aspect of the invention, there is therefore provided a method of determining parameters of a contactless electrical energy transfer system as set out in the appended claims. The first coil circuit and the second coil circuit may be aligned with respect to each other. In a first step, a first coil circuit is inductively coupled to a second coil circuit. In a second step, terminals of the second coil circuit are shorted. In a third step, an alternating voltage is applied to terminals of the first coil circuit while the terminals of the second coil circuit are shorted. The alternating voltage induces a first current in the first coil circuit and a second current in the second coil circuit. According to the present aspect, in a fourth step, the terminals of the first coil circuit are shorted while the second current is flowing, followed by measuring at least one of the first current and the second current. During the fourth step, the terminals of the second coil circuit remain shorted. In a fifth step, the parameters, advantageously including one or a combination of: a first inductance of the first coil circuit, a second inductance of the second coil circuit and a coupling factor between the first inductance and the second inductance, are determined. The measured at least one of the first current and the second current, advantageously both, are processed to determine the parameters.

According to a second aspect of the invention, there is provided a CEET system as set out in the appended claims. The CEET system comprises a first coil circuit and a second coil circuit configured for contactless inductive coupling to one another, a source for applying an alternating voltage to first terminals of the first coil circuit, a sensing unit configured for measuring at least one of a first current through the first coil circuit and a second current through the second coil circuit, and a control unit coupled to the sensing unit. The control unit is operable to determine one or more parameters of the CEET system. In particular, the control unit is configured to execute the method according to the first aspect. To this end, the control unit is operable to process one or more read outs of the sensing unit. The CEET system comprises first means, such as a first switching device, for shorting the first terminals and second means, such as a second switching device, for shorting second terminals of the second coil circuit, and the control unit is configured to activate the second means to shorting the second terminals followed by activating the first means to shorting the first terminals.

By shorting the terminals of the second coil circuit, applying a voltage to the terminals of the first coil circuit and shorting the terminals of the first coil circuit, a decay of currents trapped in the first and second coil circuits is obtained. The trapped currents will have a behaviour which relates to the coupled system of first and second coil circuits, and from which system parameters such as though not limited to inductances and coupling factor can be determined in a reliable and fast, and easy way.

In the present context, the terms first and second may be used interchangeably with the terms primary and secondary, although it is possible that the terms be reversed, e.g. the term first may refer to secondary, and second may refer to primary.

Further advantageous aspects are set out in the dependent claims.

### Brief description of the figures

Aspects of the invention will now be described in more detail with reference to the appended drawings, wherein same reference numerals illustrate same features and wherein:

FIG. 1 represents a block diagram of a contactless electrical energy transfer system with AC (e.g. the AC mains) input.
FIG. 2 represents a block diagram of a contactless electrical energy transfer system according to advantageous aspects of the present invention.
FIG. 3 represents a schematic of the inductive coupled power stage with a primary side series resonant coil circuit, a primary side controlled full-bridge circuit, a secondary side series resonant coil circuit, and a secondary side controlled full-bridge circuit as an example embodiment of aspects of the present invention.
FIG. 4 represents a flow diagram of a method of estimating parameters of a CEET system according to aspects described herein.
FIG. 5a represents a plot of an applied example test voltage to a primary side of a CEET system when terminals of the secondary side coil circuit are shorted. The test voltage is set to zero at time = 2 ms by shorting terminals of the primary side coil circuit. FIG. 5b represents a plot of the resulting current flowing in the primary side coil circuit. FIG. 5c represents a plot of the resulting current flowing in the secondary side coil circuit.
FIGs. 6a-c represent enlarged views of the plots of Figs. 5a-c respectively.

### Description of embodiments

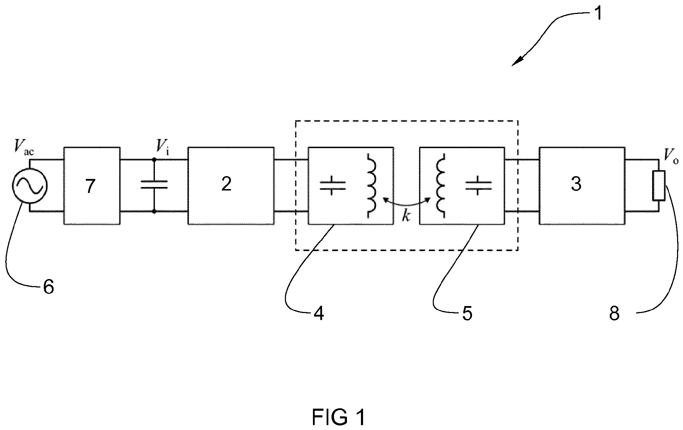

Referring to FIG. 1, a typical CEET system 1 comprises a transmitter 2 and a receiver 3. The transmitter 2 typically generates an AC signal from a DC power source and is therefore referred to as 'inverter'. The AC signal is applied to a primary-side coil circuit 4 and transmitted to a secondary-side coil circuit 5 through magnetic coupling via an air gap and further conditioned by the receiver 3 to provide the desired power to the load 8, i.e., for example a battery of an electric vehicle. Since the load typically accepts DC power, the receiver 3 is referred to as 'rectifier'. The inverter 2 can for example be a full bridge circuit with active semiconductor components while the rectifier 3 can, for example, be a passive diode bridge rectifier.

As shown in FIG. 1, generally, the input of the inverter 2 is a DC voltage, which can be generated from an AC power source 6 by an additional rectifier 7 placed at the input of the inverter 2. Both the primary-side coil circuit 4 and the secondary-side coil circuit 5 are advantageously arranged as resonator circuits comprising a coil and capacitor coupled thereto, either in series or in parallel.

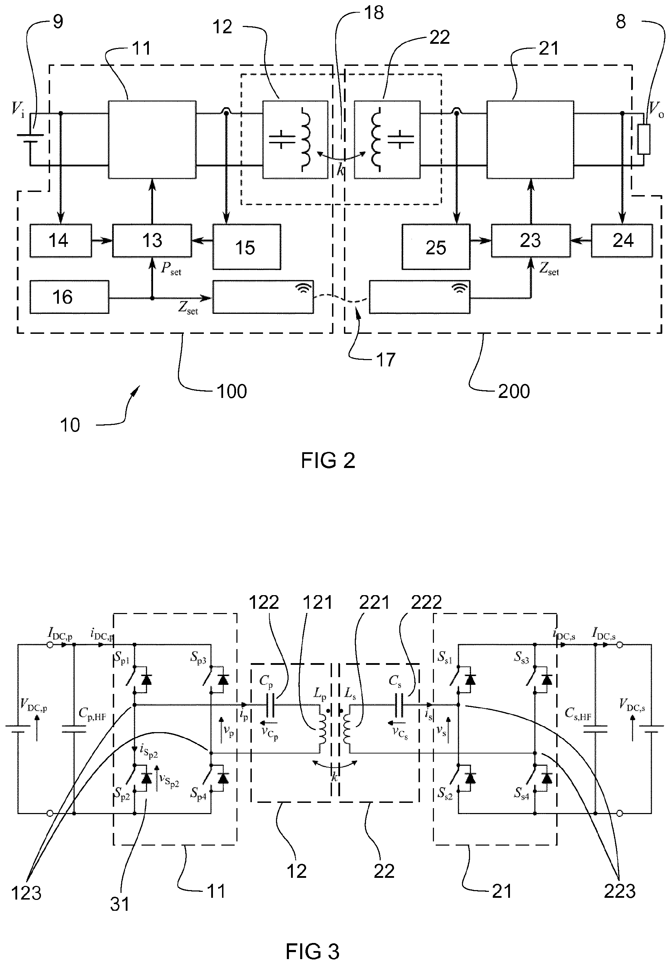

FIG. 2 shows a block diagram of a contactless electrical energy transfer (CEET) system 10 according to aspects of the present invention. The input 9 to CEET system 10 is shown as a DC power source, but may equally be an AC source (e.g. AC mains) coupled to a rectifier as shown in FIG. 1. The CEET system 10 comprises a primary side 100 configured for inductive coupling to a secondary side 200. It will be convenient to note that the secondary side may be mobile, and that the primary side 100 may be used for sequentially transferring power to different secondary sides 200, e.g. different vehicles.

The primary side 100 comprises a bridge inverter 11 connected to a primary-side induction circuit 12, which in this example is provided as a resonator circuit. The inverter 11 is advantageously implemented as a full bridge circuit, and advantageously as a controlled bridge circuit, comprising at least two, advantageously four actively switchable semiconductor switches for converting the DC voltage to an AC signal. The inverter 11 is connected to the DC input 9 and converts the DC input voltage into a switched, square wave AC voltage that is applied to the primary-side resonator 12.

The secondary side 200 comprises a bridge rectifier 21 connected to a secondary-side induction circuit 21, which in this example is provided as a resonator circuit. The rectifier 21 is advantageously implemented as a full bridge circuit, and advantageously as a controlled bridge circuit, comprising at least two, advantageously four actively switchable semiconductor switches for converting the AC current provided at the output terminals of the secondary-side induction circuit to a DC current which is provided to a DC load 8.

One of the bridge circuits 11 or 21, for example the inverter 11, is operated with a driving frequency while the other, for example the rectifier 21, operates with a following frequency. The pulse signals used to drive the bridge circuits are generated by local controllers 13, 23 of the primary side and secondary side, respectively. Either one or both the primary side 100 and the secondary side 200 may further comprise respective voltage sensing units 14, 24 to sense voltage input to the inverter 11 or output from rectifier 21. In addition, the primary side 100, and possibly also the secondary side 200 further comprises sensing units 15, 25 for sensing the AC current that flows between the respective bridge circuit 11, 21 and the corresponding induction circuit 12, 22. Current sensing units 15, 25 may be configured to sense the phase and/or magnitude, or even to sample the AC current in order to reconstruct its waveform.

One of the local controllers 13, 23, for example the primary side controller 13, is configured to generate control pulses that are of a driving frequency (switching frequency). The other local controller, for example the secondary side controller 23, is configured to generate pulses that are of following frequency (i.e. following the driving frequency). One of the local controllers, for example the primary side controller 13, may be implemented as power controller to regulate the input power of the inverter 11. The other local controller, for example the secondary side controller 23, may be implemented as impedance controller to regulate the active and/or the reactive part of the impedance of rectifier 21. The power and the impedance is advantageously controlled/regulated cycle by cycle (or half-cycle by half-cycle). A main controller 16, e.g. provided at the input side, may be configured to generate high-level set-points for the local controllers 13 and 23, for example a power set-point $Pset$ for the local power controller (e.g. 13), and optionally an impedance set-point for the local impedance controller (e.g. 23). The power set-point defined by the main controller 16 may be based on external inputs such as for example the charge state of a battery acting as load 8. The impedance set-point defined by the main controller 16 may be defined such that the system efficiency is optimized for each power set-point and for each specific condition of the input and/or output voltage, the coupling factor, and the self-inductance values, for example by minimization of the circulating currents in the induction circuits while maintaining zero voltage switching (ZVS) and/or zero current switching (ZCS) conditions in both the inverter and rectifier device. The main controller 16 may also be configured for the calculation of other free control parameters such as for example the switching frequency of the driving switching circuit.

Communication between the main controller 16 and the local controllers 13, 23 may be implemented using wired or wireless communication. By way of example, main controller 16 is coupled to local controller 13 through a wired communication interface. Coupling between main controller 16 and local controller 23 at the secondary side can be implemented through a wireless communication interface 17, which advantageously need not be high-speed, e.g. communication speed lower than the driving frequency.

The primary side and secondary side induction circuits 12, 22 comprise coils that are electrically isolated from each other and that are coupled through an air gap 18 with a coupling factor $k$. The induction circuits are advantageously implemented with a resonant topology in order to efficiently recover the energy stored in the relatively large self-inductances of the air transformer. Generally, any resonant topology can be used for both the primary-side and secondary-side resonators.

An example of power control implementation will now be described for the case inverter 11 is operated with driving frequency. At the primary side (input), the DC input voltage of the inverter 11 and the magnitude and phase of the AC output current of the inverter are sensed by means of sensing units 14 and 15 respectively. The AC square-wave voltage generated by the inverter 11 is of driving frequency which may be set in dependence on the coupling factor, the demanded power level, and the input and output voltages of the CEET system in order to maximize efficiency. The phase of the AC square-wave voltage is serving as a reference (driving frequency) and advantageously does not change during operation, i.e. the phase information of the output current of the inverter 11 is obtained by sensing unit 15 with reference to the AC square-wave voltage generated by the inverter. The sensed input voltage (by unit 14), the sensed current, and the sensed phase (by unit 15) may be used to control the pulse-width of the AC square-wave voltage generated by the inverter 11, such that the power that is transferred from the inverter 11 to the primary side resonator 12 is maintained substantially constant and independent of output voltage changes and load changes.

At the secondary side (output), the DC output voltage of the rectifier 21 and the magnitude and phase of the AC input current to the rectifier are sensed by units 24 and 25 respectively. An AC square-wave voltage is generated by the rectifier 21 and is of following frequency, i.e. the AC square-wave voltage is applied with reference to the phase of the AC input current of the rectifier. The sensed output voltage by unit 24 and the sensed current by unit 25 can be used as input to the secondary side controller 23 which is advantageously configured to control the phase and the pulse-width of the AC square-wave voltage generated by the rectifier, such that the impedance of the rectifier is regulated. The frequency of the AC square-wave voltage generated by the rectifier 21 is following the frequency of the AC input current of the rectifier, and settles at the driving frequency (switching frequency) of the inverter 11. During transients such as power changes, input voltage and output voltage changes, and changes of the coupling factor, the two frequencies may however differ from each other.

The sensing units 15 and 25 may comprise a current measurement transformer with zero-crossing detection circuit for sensing phase and magnitude information of the output current of the inverter 11 and of the input current of the rectifier 21.

FIG. 3 shows an electric circuit diagram of an exemplary embodiment of a system according to an aspect of the present invention, e.g. of CEET system 10 of FIG. 2. Both bridge circuits of the primary side and the secondary side (inverter 11 and rectifier 21 respectively) are advantageously arranged in the form of a full-bridge circuit, each comprising four actively controlled semiconductor switching devices $S_{p1}$ - $S_{p4}$ and $S_{s1}$ - $S_{S4}$ respectively, which are shown with their internal antiparallel diodes 31. Each full bridge is able to generate a three-level $\leq 50\%$ duty-cycle AC square wave voltage at the resonator terminals 123 and 223 respectively.

Furthermore, in the above example, both the primary side and secondary side resonators 12, 22 are implemented as a series connection of an energy transfer coil 121, 221 and a series capacitor 122, 222 respectively, wherein each series connection forms a resonant tank. Still referring to FIG. 3, the input power source and the load may both be replaced by a voltage source, i.e. $V_{DC,p}$ and $V_{DC,s}$ respectively, under the assumption that the input voltage and output voltage are constant and have negligible ripple. This is because the high-frequency content of the input current $i_{DC,p}$ of the primary side bridge circuit 11 and of the output current $i_{DC,s}$ of the secondary side bridge circuit 21 are advantageously filtered by high-frequency filter capacitors $C_{p,HF}$ and $C_{s,HF}$, respectively, facilitating smooth DC currents $I_{DC,p}$ and $I_{DC,s}$, and smooth DC voltages $V_{DC,p}$ and $V_{DC,s}$.

In order to verify if power transfer is possible and to determine how to control the CEET system, it is advantageous to have information about the circuit parameters. In particular, it will be convenient to determine the parameters related to the coupled inductors, as they are highly dependent on the alignment and distance of the primary side coil with respect to the secondary side coil.

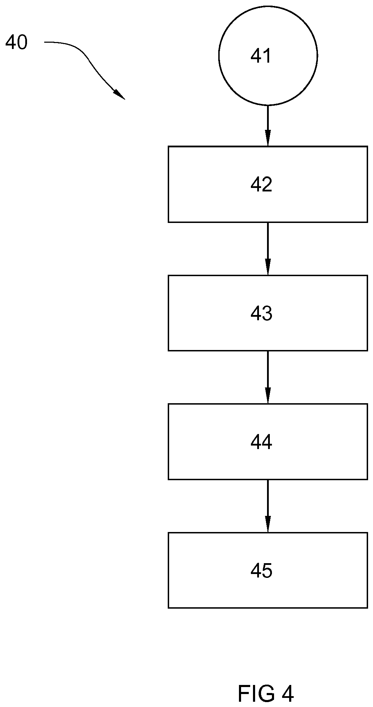

According to aspects of the invention, the coupling factor (k) the primary inductance (Lp) and the secondary inductance (Ls) of CEET system 10 are quantitatively estimated. To this end, referring to FIG. 4, a method 40 of estimating or determining these parameters may proceed as detailed below.

In operation 41, the secondary coil 221 is inductively coupled to the primary coil 121. Either one of the primary coil and the secondary coil can be mobile, and therefore operation 41 may comprise bringing the coils in close vicinity. Typically, in case of charging of electric vehicles, the secondary side 200 is located on the vehicle. The vehicle, and with it the secondary side 200 may be brought in close vicinity to the primary side 100 using suitable positioning sensors.

Before starting power transfer, it is advantageous to start a test sequence according to present aspects, in order to test the inductively coupled (resonator) coil circuits 12, 22 and to determine the parameters thereof. To this end, in operation 42, the secondary coil circuit 22 is shorted. In particular, secondary terminals 223 are shorted, meaning that the electrical connection between the secondary coil circuit 22 and the rectifier 21 is shorted. In the particular case of FIG. 3, this means that the resonator circuit 22, including secondary coil 221 and capacitor Cs, are shorted. There are various ways for accomplishing this. One suitable example is by closing the bottom semiconductor switches $S_{s2}$ and $S_{S4}$ of the bridge circuit of rectifier 21 in FIG. 3. Alternatively, the top semiconductor switches $S_{s1}$ and $S_{S3}$ of the bridge circuit of rectifier 21 can be closed. In a yet alternative example, e.g. when the bridge circuit of rectifier 21 cannot be actively switched, an additional circuit can be provided between secondary terminals 223, e.g. as described in DE 10 2015 223 230, FIG. 2.

In operation 43, a test voltage $v_P$ is applied to the terminals 123 of the primary coil circuit. The test voltage is an alternating (AC) voltage having a waveform with advantageously a fixed excitation frequency and advantageously a constant magnitude. The excitation frequency can be chosen to be at some distance, e.g. a few kHz, from the expected resonance frequency of the resonator circuits 12 and 22. The test voltage at terminals 123 will induce a primary current $i_P$ in the primary coil circuit 12, and due to the inductive coupling between circuits 12 and 22, a secondary current is will be induced in the secondary coil circuit 22, and more particularly in the short-circuit connection through terminals 223.

The amplitude of the currents $ip$ and $i_S$ is measured by current sensing units 15 and 25, respectively. If the current amplitude is too low, the local controller 13 and/or main controller 16 may be set to increase the frequency or duty cycle of the AC voltage $v_P$ until currents of suitable amplitude are sensed. The current sensing units 15, 25 measure the amplitude of primary and secondary currents $ip$ and $i_S$ and input the measured currents to respective local controllers 13, 23, which in turn may input these values to main controller 16. Controller 16 may be programmed to determine the ratio of the (amplitudes of the) secondary current to the primary current $i_S/i_P$.

Next, in operation 44, while the secondary coil circuit 22 remains shorted as indicated above, the primary coil circuit is shorted, e.g. at terminals 123. There are various ways for accomplishing this. One suitable example is by closing the bottom semiconductor switches $S_{p2}$ and $S_{p4}$ of the bridge circuit of inverter 11 in FIG. 3. Alternatively, the top semiconductor switches $S_{p1}$ and $S_{p3}$ of the bridge circuit of inverter 11 can be closed. In a yet alternative example, an additional circuit can be provided between primary terminals 123 in order to close (short circuit) the terminals 123. One advantage of using a bridge circuit with actively switchable semiconductor switches, e.g. field effect transistors (FETs), is that no additional hardware is required to implement methods according to aspects of the present invention.

Shorting the primary coil circuit results in a zero voltage across primary terminals 123. At the instant of shorting the primary terminals, currents are flowing both through the primary coil circuit (current $i_P$) and through the secondary coil circuit (current $i_S$), which were induced by the test voltage $v_P$ set previously in operation 43. As a result of shorting the primary terminals and the secondary terminals, the resonator circuits start oscillating wherein energy is repeatedly exchanged between the capacitive and inductive elements. This energy dampens out due to losses in the circuits. As a result, the currents $i_P$ and $i_S$ dampen out.

In operation 45, the parameters are determined, advantageously by processing measurements obtained in operation 43, and further by processing measurements obtained in operation 44, in particular of the current $i_P$ and/or $i_S$ while these dampen out. In case the primary and secondary coil circuits are formed as resonator circuits (e.g. as shown in FIG. 3), the currents will dampen out in the primary and secondary resonator circuits according to eigenfrequencies, $\omega_a$ and $\omega_b$, respectively, which relate to the coupled system of primary and secondary induction circuits. There are various ways in which the eigenfrequencies $\omega_a$ and $\omega_b$ can be determined from the current waveforms. One suitable example is by sampling the current and reconstructing the waveform. A Fourier transform can be applied to the waveform in order to determine an eigenfrequency. Alternatively, the time between consecutive zero crossings of the current, e.g. the primary current, can be determined, which is an indication of the eigenfrequencies. Operations for determining the eigenfrequencies $\omega_a$ and $\omega_b$ can be implemented in main controller 16 and/or local controllers 13, 23.

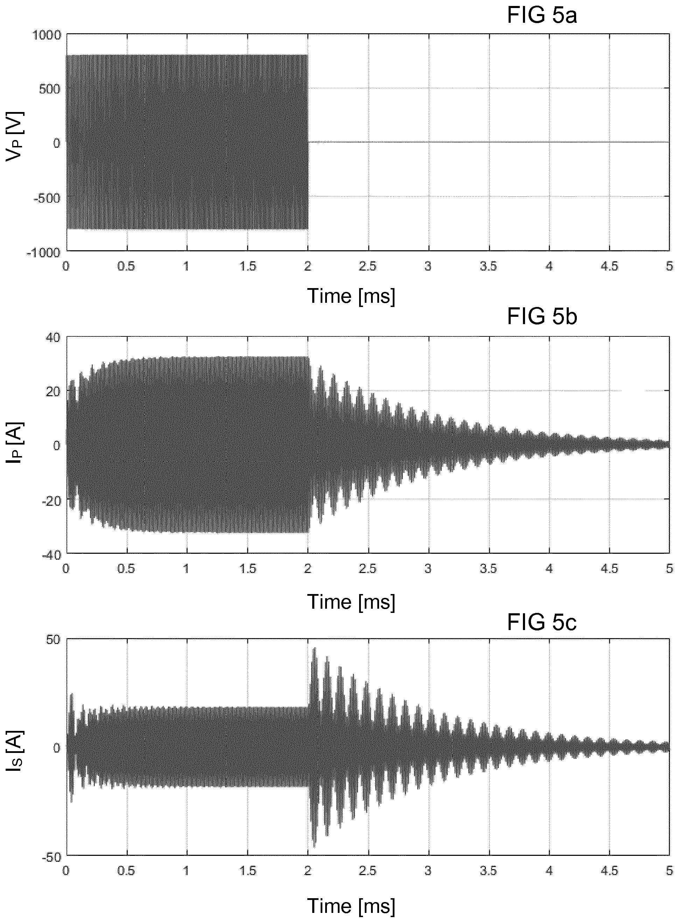

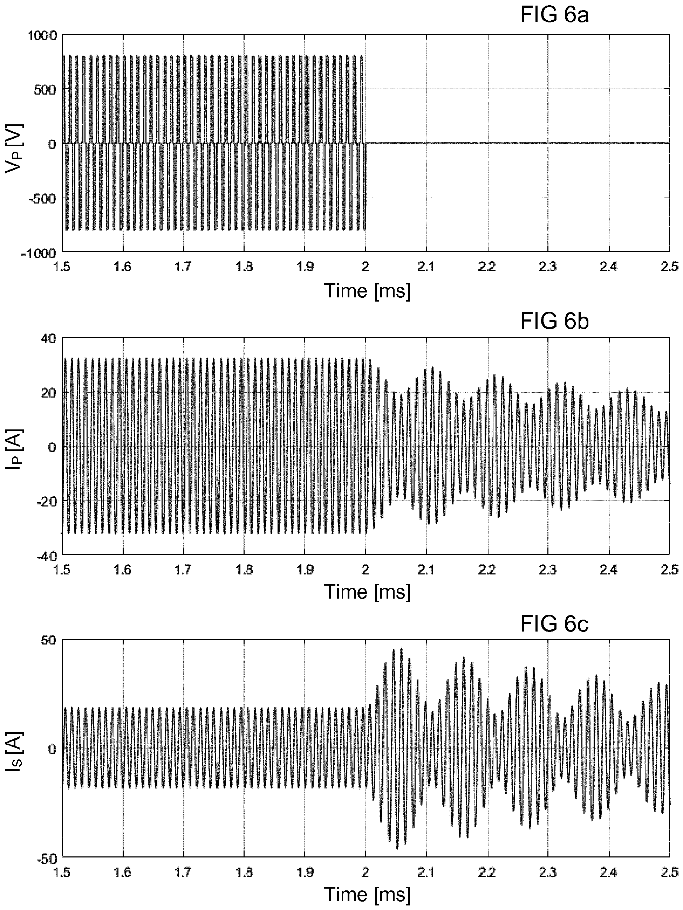

FIGs. 5a-c show example graphs of the applied test voltage $v_P$ (FIG. 5a) at primary terminals 123 and the induced currents $ip$ in the primary side coil circuit (FIG. 5b) and is in the secondary side coil circuit (FIG. 5c). As can be seen, test voltage $v_P$ is applied until the current amplitudes have reached a suitable level. In FIGs 5a-c, this is e.g. the case after 2 ms. The test voltage has a fixed amplitude and frequency. The amplitude of currents $i_P$ and $i_S$ can be measured during this time period, corresponding with operation 43. Once the current amplitudes have reached a suitable level, e.g. at time instant 2 ms, the primary terminals 123 are shorted. From this time instant, it can be seen that the currents $i_P$ and $i_S$ dampen out. FIGs. 6a-c show enlarged views of the graphs of FIGs. 5a-c respectively during the time frame 1.5 - 2.5 ms. It can be seen, e.g. in FIG. 6b that the frequency of the currents changes between the period in which the test voltage is applied and the period following shorting the primary terminals. As indicated above, following shorting the primary terminals, the system will start resonating at the eigenfrequencies $\omega_a$ and $\omega_b$.

On the basis of the ratio $i_S/i_P$ determined in operation 43, and $\omega_a$ and $\omega_b$ determined in operation 45, the parameters of the inductive system 12-22: $k$, $L_p$ and $L_s$ can be determined. In the case of resonant coil circuits, and more specifically in case of a series LC-circuit as shown in Fig. 3, use may be made of the following equations.

The input impedance can be analyzed in the Laplace domain as:

$$H(s) = \frac{V_p(s)}{I_p(s)} = \frac{C_p \cdot \left(\frac{1}{\omega_s^2}s^2 + \tau_s s + 1\right)s}{\frac{1-k^2}{\omega_p^2\omega_s^2}s^4 + \left(\frac{\tau_s}{\omega_p^2} + \frac{\tau_p}{\omega_s^2}\right)s^3 + \left(\frac{1}{\omega_p^2} + \frac{1}{\omega_s^2} + \tau_p\tau_s\right)s^2 + \left(\tau_p + \tau_s\right)s + 1}$$

wherein the uncoupled LC resonance frequencies $\omega_p$ and $\omega_s$ of the primary LC tank circuit and the secondary LC tank circuit respectively, can be described as:

$$L_p C_p = \frac{1}{\omega_p^2}$$

$$L_s C_s = \frac{1}{\omega_s^2}$$

wherein $C_p$ and $C_s$ are the respective capacitors of the primary and secondary resonant coil circuits, which are known from design. Eigenfrequencies $\omega_a$ and $\omega_b$ are equal to the poles of $H(s)$. These can thus be written as:

$$\omega_a^2 = \frac{\omega_p^2 + \omega_s^2 + \sqrt{\left(\omega_p^2 - \omega_s^2\right)^2 + 4\omega_p^2\omega_s^2 k^2}}{2(1 - k^2)}$$

$$\omega_b^2 = \frac{\omega_p^2 + \omega_s^2 - \sqrt{\left(\omega_p^2 - \omega_s^2\right)^2 + 4\omega_p^2\omega_s^2 k^2}}{2(1 - k^2)}$$

with the magnetic coupling expressed as:

$$k = \frac{I_s}{I_p} \cdot \sqrt{\frac{C_p}{C_s}} \cdot \frac{\omega_p}{\omega_s} \cdot \left(1 - \frac{\omega_s^2}{\omega_e^2}\right)$$

in which $\omega_e$ represents the excitation frequency of the test voltage $v_P$ and $I_s$ and $I_p$ the (steady-state) amplitude of $i_P$ and $i_S$ respectively during application of the test voltage. The latter three equations can be solved for the three unknowns: $\omega_p$, $\omega_s$ and $k$, since the other parameters are known. From these unknowns, the parameters $k$, $L_p$ and $L_s$ of the inductive system can be determined with the equations outlined in the preceding paragraph. Calculations based on the above equations can be implemented in main controller 16.

Advantageously, additional parameters of the inductive system may be determined by performing additional measurements. By way of example, the resistive values of the primary and secondary coil circuits may be determined using the following equations:

$$R_p C_p = \tau_p$$

$$R_s C_s = \tau_s$$

wherein $R_p$ and $R_s$ are the respective resistances of the primary and secondary resonant coil circuits and $\tau_p$ and $\tau_s$ the respective time constants of the primary and secondary coil circuits. $\tau_p$ and $\tau_s$ can be derived from the rate of decay (dampening) of the currents $ip$ and $i_S$ following shorting of the primary terminals.

In case the primary side and secondary side induction circuits 12, 22 are not arranged as resonant (LC) circuits, methods according to the invention may still be used to determine system parameters. In such case, a same procedure as outlined above may be used. Firstly, the terminals at the secondary side are shorted. An alternating voltage is applied to terminals of the primary coil circuit while the terminals of the secondary coil circuit are shorted. The ratio between magnitudes of the secondary current to the primary current $i_S/i_P$ can be determined and is an indication of the gain which relates to the coupling factor. Next, the terminals at the primary side can be shorted. Thereafter, the currents in the primary and secondary induction circuits will decay due to resistive losses with a time constant which relates to the inductances $L_p$ and $L_s$. Methods and systems according to aspects of the invention therefore allow to determine system parameters also when non-resonant induction circuits are used for energy transfer.

The values of the above parameters as estimated may be used in appropriate control algorithms implemented in controllers 16, 13 and/or 23 in order to optimize power transfer. Alternatively, or in addition, the parameter values as obtained may be used for error checking. By way of example, any one of the parameters may be compared to predetermined threshold values and an error signal may be output by any one of the controllers if the comparison test is not met.

The methods according to aspects of the present invention can be carried out in a limited time frame, e.g. within 5 ms, advantageously enabling the parameter estimation to be carried out each time before a power transfer operation starts, and possibly repeated several times in between a power transfer operation, e.g. every 30 minutes in order to ensure most efficient control and possibly adaptively update the parameters during power transfer operation. Furthermore, methods according to aspects of the present invention enable to determine system parameters in a very accurate way, e.g. with less than 2% error.

**Claims**

1. Method of determining parameters of a contactless electrical energy transfer, CEET, system (10), comprising:

> inductively coupling a first coil circuit (12) to a second coil circuit (22),
> shorting terminals (223) of the second coil circuit,
> applying an alternating voltage to terminals (123) of the first coil circuit while the terminals of the second coil circuit are shorted, the alternating voltage inducing a first current in the first coil circuit and a second current in the second coil circuit,

> **characterised in that** the method comprises:
> shorting the terminals (123) of the first coil circuit while the second current is flowing, followed by measuring at least one of the first current and the second current, and processing the measured at least one of the first current and the second current to determine the parameters.

2. Method of claim 1, wherein the alternating voltage has a constant magnitude and a fixed frequency.

3. Method of claim 1 or 2, wherein the parameters comprise one or a combination of: a first inductance ($L_p$) of the first coil circuit, a second inductance ($L_s$) of the second coil circuit and a coupling factor (k) between the first inductance and the second inductance.

4. Method of any one of the preceding claims, wherein determining the parameters comprises determining a ratio between a magnitude of the first current (ip) and a magnitude of the second current ($i_S$) in a time interval between shorting the terminals of the second coil circuit and shorting the terminals of the first coil circuit.

5. Method of any one of the preceding claims, wherein the first coil circuit (12) and the second coil circuit (22) are resonant circuits.

6. Method of claim 5, wherein at least one of the first coil circuit and the second coil circuit is a series LC circuit.

7. Method of claim 5 or 6, wherein determining the parameters comprises determining at least one eigenfrequency on the basis of the at least one of the first current and the second current measured following the step of shorting the terminals of the first coil circuit.

8. A contactless electrical energy transfer, CEET, system (10), comprising:

> a first coil circuit (12) and a second coil circuit (22) configured for contactless inductive coupling to one another,
> a source (9) for applying a voltage to first terminals (123) of the first coil circuit,
> first means ($S_{p1}$-$S_{p4}$) for shorting the first terminals (123) and second means ($S_{s1}$-$S_{s4}$) for shorting second terminals (223) of the second coil circuit,
> a sensing unit (15, 25) configured for measuring at least one of a first current through the first coil circuit and a second current through the second coil circuit,
> a control unit (16) coupled to the sensing unit, to the first means ($S_{p1}$-$S_{p4}$) for shorting the first terminals (123) and to the second means ($S_{s1}$-$S_{s4}$) for shorting the second terminals (223), wherein the control unit is configured to execute the method of any one of the claims 1 to 7.

9. The CEET system of claim 8, comprising a first bridge circuit (11) comprising first actively switchable semiconductor switches ($S_{p1}$-$S_{p4}$) coupled to the first coil circuit and a second bridge circuit (21) comprising second actively switchable semiconductor switches ($S_{s1}$-$S_{s4}$) coupled to the second coil circuit, wherein the control unit is operable to close predetermined ones of the first and second actively switchable semiconductor switches to respectively obtain shorting of the first terminals and shorting of the second terminals.

10. The CEET system of claim 8 or 9, wherein the first coil circuit (12) and the second coil circuit (22) are resonant circuits.

11. The CEET system of claim 10, wherein at least one of the first coil circuit and the second coil circuit is a series LC circuit.

12. The CEET system of claim 8 or 9, wherein the control unit is configured to read out at least one of the first current and the second current from the sensing unit following activating the first means and to process the read out at least one of the first current and the second current to determine at least one eigenfrequency.

13. The CEET system of any one of the claims 8 to 12, wherein the sensing unit comprises a first unit (15) configured for measuring the first current and a second unit (25) configured for measuring the second current, wherein the control unit is configured to read out the first current and the second current between activating the second means to shorting the second terminals and activating the first means to shorting the first terminals.

14. The CEET system of any one of claims 8 to 13, wherein the control unit is operable to carry out the method according to any one of the claims 1 to 7.

15. A ground assembly (100) of a CEET system (10), comprising the first coil circuit (12), the source (9), the first means ($S_{p1}$-$S_{p4}$), the first sensing unit (15) and the control unit (16, 13) as in any one of the claims 8 to 14, and further comprising a wireless communication interface (17) coupled to the control unit.

**Patentansprüche**

1. Verfahren zum Bestimmen von Parametern eines Systems (10) zur kontaktlosen Übertragung elektrischer Energie, CEET, umfassend:

   induktives Koppeln einer ersten Spulenschaltung (12) mit einer zweiten Spulenschaltung (22),
   Kurzschließen von Anschlüssen (223) der zweiten Spulenschaltung,
   Anlegen einer Wechselspannung an Anschlüsse (123) der ersten Spulenschaltung, während die Anschlüsse der zweiten Spulenschaltung kurzgeschlossen sind, wobei die Wechselspannung einen ersten Strom in der ersten Spulenschaltung und einen zweiten Strom in der zweiten Spulenschaltung induziert,
   **dadurch gekennzeichnet, dass** das Verfahren Folgendes umfasst:
   Kurzschließen der Anschlüsse (123) der ersten Spulenschaltung, während der zweite Strom fließt, gefolgt von Messen von mindestens einem des ersten Stroms und des zweiten Stroms und Verarbeiten des gemessenen mindestens einen des ersten Stroms und des zweiten Stroms, um die Parameter zu bestimmen.

2. Verfahren nach Anspruch 1, wobei die Wechselspannung eine konstante Magnitude und eine feste Frequenz aufweist.

3. Verfahren nach Anspruch 1 oder 2, wobei die Parameter eines oder eine Kombination des Folgenden umfassen: eine erste Induktivität ($L_p$) der ersten Spulenschaltung, eine zweite Induktivität ($L_s$) der zweiten Spulenschaltung und einen Kopplungsfaktor (k) zwischen der ersten Induktivität und der zweiten Induktivität.

4. Verfahren nach irgendeinem der vorhergehenden Ansprüche, wobei das Bestimmen der Parameter das Bestimmen eines Verhältnisses zwischen einer Magnitude des ersten Stroms (ip) und einer Magnitude des zweiten Stroms ($i_S$) in einem Zeitintervall zwischen dem Kurzschließen der Anschlüsse der zweiten Spulenschaltung und dem Kurzschließen der Anschlüsse der ersten Spulenschaltung umfasst.

5. Verfahren nach irgendeinem der vorhergehenden Ansprüche, wobei die erste Spulenschaltung (12) und die zweite Spulenschaltung (22) Schwingkreise sind.

6. Verfahren nach Anspruch 5, wobei mindestens eine der ersten Spulenschaltung und der zweiten Spulenschaltung eine Reihen-LC-Schaltung ist.

7. Verfahren nach Anspruch 5 oder 6, wobei das Bestimmen der Parameter das Bestimmen mindestens einer Eigenfrequenz auf der Basis des gemessenen mindestens einen des ersten Stroms und des zweiten Stroms, nach dem Schritt des Kurzschließens der Anschlüsse der ersten Spulenschaltung umfasst.

8. System (10) zur kontaktlosen Übertragung elektrischer Energie, CEET, umfassend:

eine erste Spulenschaltung (12) und eine zweite Spulenschaltung (22), die zum kontaktlosen induktiven Koppeln miteinander gestaltet sind,

eine Quelle (9) zum Anlegen einer Spannung an erste Anschlüsse (123) der ersten Spulenschaltung,

erste Mittel (S$_{p1}$-S$_{p4}$) zum Kurzschließen der ersten Anschlüsse (123) und zweite Mittel (S$_{S1}$-S$_{S4}$) zum Kurzschließen zweiter Anschlüsse (223) der zweiten Spulenschaltung,

eine Abtasteinheit (15, 25), die für das Messen mindestens eines von einem ersten Strom durch die erste Spulenschaltung und einem zweiten Strom durch die zweite Spulenschaltung gestaltet ist,

eine Steuereinheit (16), die mit der Abtasteinheit, den ersten Mitteln (S$_{p1}$-S$_{p4}$) zum Kurzschließen der ersten Anschlüsse (123) und den zweiten Mitteln (S$_{S1}$-S$_{S4}$) zum Kurzschließen der zweiten Anschlüsse (223) gekoppelt ist, wobei die Steuereinheit dafür gestaltet ist, das Verfahren nach irgendeinem der Ansprüche 1 bis 7 auszuführen.

9. Das CEET-System nach Anspruch 8, umfassend eine erste Brückenschaltung (11), die erste aktiv schaltbare Halbleiterschalter (S$_{p1}$-S$_{p4}$) umfasst, die mit der ersten Spulenschaltung gekoppelt sind, und eine zweite Brückenschaltung (21), die zweite aktiv schaltbare Halbleiterschalter (S$_{S1}$-S$_{S4}$) umfasst, die mit der zweiten Spulenschaltung gekoppelt sind, wobei die Steuereinheit zum schließen vorbestimmter erster und zweiter aktiv schaltbarer Halbleiterschalter funktionsfähig ist, um ein Kurzschließen der ersten Anschlüsse beziehungsweise Kurzschließen der zweiten Anschlüsse zu erzielen.

10. Das CEET-System nach Anspruch 8 oder 9, wobei die erste Spulenschaltung (12) und die zweite Spulenschaltung (22) Schwingkreise sind.

11. Das CEET-System nach Anspruch 10, wobei mindestens eine der ersten Spulenschaltung und der zweiten Spulenschaltung eine Reihen-LC-Schaltung ist.

12. Das CEET-System nach Anspruch 8 oder 9, wobei die Steuereinheit dafür gestaltet ist, nach Aktivieren der ersten Mittel mindestens eines des ersten Stroms und des zweiten Stroms von der Abtasteinheit abzulesen, und der abgelesene mindestens eine des ersten Stroms und des zweiten Stroms zu verarbeiten, um mindestens eine Eigenfrequenz zu bestimmen.

13. Das CEET-System nach irgendeinem der Ansprüche 8 bis 12, wobei die Abtasteinheit eine erste Einheit (15), die für das Messen des ersten Stroms gestaltet ist, und eine zweite Einheit (25), die für das Messen des zweiten Stroms gestaltet ist, umfasst, wobei die Steuereinheit dafür gestaltet ist, den ersten Strom und den zweiten Strom zwischen dem Aktivieren der zweiten Mittel zum Kurzschließen der zweiten Anschlüsse und dem Aktivieren der ersten Mittel zum Kurzschließen der ersten Anschlüsse abzulesen.

14. Das CEET-System nach irgendeinem der Ansprüche 8 bis 13, wobei die Steuereinheit funktionsfähig ist, das Verfahren nach irgendeinem der Ansprüche 1 bis 7 auszuführen.

15. Eine Bodenanordnung (100) eines CEET-Systems (10), umfassend die erste Spulenschaltung (12), die Quelle (9), die ersten Mittel (S$_{p1}$-S$_{p4}$), die erste Abtasteinheit (15) und die Steuereinheit (16, 13) wie in irgendeinem der Ansprüche 8 bis 14 und ferner umfassend eine Schnittstelle (17) zur drahtlosen Kommunikation, die mit der Steuereinheit gekoppelt ist.

**Revendications**

1. Procédé de détermination de paramètres d'un système (10) de transfert d'énergie électrique sans contact, CEET, comprenant les étapes consistant à :

mettre en oeuvre un couplage inductif d'un premier circuit de bobine (12) à un second circuit de bobine (22) ;
court-circuiter des bornes (223) du second circuit de bobine ;
appliquer une tension alternative à des bornes (123) du premier circuit de bobine tandis que les bornes du second circuit de bobine sont court-circuitées, la tension alternative induisant un premier courant dans le premier circuit de bobine et un second courant dans le second circuit de bobine ;

**caractérisé en ce que** le procédé comprend les étapes consistant à :
court-circuiter les bornes (123) du premier circuit de bobine pendant que le second courant circule, mesurer ensuite au moins l'un parmi le premier courant et le second courant, et traiter ledit au moins l'un du premier courant et du second courant mesurés, en vue de déterminer les paramètres.

2. Procédé selon la revendication 1, dans lequel la tension alternative présente une amplitude constante et une fréquence fixe.

3. Procédé selon la revendication 1 ou 2, dans lequel les paramètres comprennent un élément ou une combinaison des éléments ci-après : une première inductance ($L_p$) du premier circuit de bobine, une seconde inductance ($L_s$) du second circuit de bobine et un facteur de couplage (k) entre la première inductance et la seconde inductance.

4. Procédé selon l'une quelconque des revendications précédentes, dans lequel l'étape de détermination des paramètres consiste à déterminer un rapport entre une amplitude du premier courant ($i_P$) et une amplitude du second courant (is) dans un intervalle de temps entre la mise en court-circuit des bornes du second circuit de bobine et la mise en court-circuit des bornes du premier circuit de bobine.

5. Procédé selon l'une quelconque des revendications précédentes, dans lequel le premier circuit de bobine (12) et le second circuit de bobine (22) sont des circuits résonnants.

6. Procédé selon la revendication 5, dans lequel au moins l'un du premier circuit de bobine et du second circuit de bobine est un circuit LC série.

7. Procédé selon la revendication 5 ou 6, dans lequel l'étape de détermination des paramètres consiste à déterminer au moins une fréquence propre sur la base dudit au moins l'un du premier courant et du second courant mesurés suite à l'étape de mise en court-circuit des bornes du premier circuit de bobine.

8. Système (10) de transfert d'énergie électrique sans contact, CEET, comprenant :

   un premier circuit de bobine (12) et un second circuit de bobine (22) configurés pour un couplage inductif sans contact l'un avec l'autre ;
   une source (9) pour appliquer une tension à des premières bornes (123) du premier circuit de bobine ;
   des premiers moyens ($S_{p1}$-$S_{p4}$) pour court-circuiter les premières bornes (123) et des seconds moyens ($S_{s1}$-$S_{s4}$) pour court-circuiter des secondes bornes (223) du second circuit de bobine,
   une unité de détection (15, 25) configurée de manière à mesurer au moins l'un parmi un premier courant à travers le premier circuit de bobine et un second courant à travers le second circuit de bobine ;
   une unité de commande (16) couplée à l'unité de détection, aux premiers moyens ($S_{p1}$-$S_{p4}$) pour court-circuiter les premières bornes (123) et aux seconds moyens ($S_{s1}$-$S_{s4}$) pour court-circuiter les secondes bornes (223), dans laquelle l'unité de commande est configurée de manière à mettre en œuvre le procédé selon l'une quelconque des revendications 1 à 7.

9. Système CEET selon la revendication 8, comprenant un premier circuit en pont (11) comprenant des premiers commutateurs à semi-conducteurs activement commutables ($S_{p1}$-$S_{p4}$) couplés au premier circuit de bobine et un second circuit en pont (21) comprenant des seconds commutateurs à semi-conducteurs activement commutables ($S_{s1}$-$S_{s4}$) couplés au second circuit de bobine, dans laquelle l'unité de commande est exploitable de manière à fermer des commutateurs prédéterminés des premiers et seconds commutateurs à semi-conducteurs activement commutables en vue d'obtenir respectivement la mise en court-circuit des premières bornes et la mise en court-circuit des secondes bornes.

10. Système CEET selon la revendication 8 ou 9, dans lequel le premier circuit de bobine (12) et le second circuit de bobine (22) sont des circuits résonnants.

11. Système CEET selon la revendication 10, dans lequel au moins l'un du premier circuit de bobine et du second circuit de bobine est un circuit LC série.

12. Système CEET selon la revendication 8 ou 9, dans lequel l'unité de commande est configurée de manière à lire au moins l'un parmi le premier courant et le second courant à partir de l'unité de détection, suite à l'activation des premiers moyens, et à traiter ledit au moins l'un du premier courant et du second courant lus, en vue de déterminer au moins une fréquence propre.

**13.** Système CEET selon l'une quelconque des revendications 8 à 12, dans lequel l'unité de détection comprend une première unité (15) configurée de manière à mesurer le premier courant et une seconde unité (25) configurée de manière à mesurer le second courant, dans lequel l'unité de commande est configurée de manière à lire le premier courant et le second courant entre l'activation des seconds moyens pour court-circuiter les secondes bornes et l'activation des premiers moyens pour court-circuiter les premières bornes.

**14.** Système CEET selon l'une quelconque des revendications 8 à 13, dans lequel l'unité de commande est exploitable de manière à mettre en œuvre le procédé selon l'une quelconque des revendications 1 à 7.

**15.** Ensemble au sol (100) d'un système CEET (10), comprenant le premier circuit de bobine (12), la source (9), les premiers moyens ($S_{p1}$-$S_{p4}$), la première unité de détection (15) et l'unité de commande (16, 13) selon l'une quelconque des revendications 8 à 14, et comprenant en outre une interface de communication sans fil (17) couplée à l'unité de commande.

FIG 1

FIG 2

FIG 3

40

41

42

43

44

45

FIG 4

## FIG 5a

## FIG 5b

## FIG 5c

FIG 6a

FIG 6b

FIG 6c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015223230

- US 20170080814 A